# EUROPEAN PATENT APPLICATION

(11) **EP 4 765 213 A1**
(43) Date of publication of application: **24.06.2026**
(21) Application number: 25222789.7
(22) Date of filing: 11.12.2025
(51) Int. Cl.: H01M 4/04

(54) **MANUFACTURING DEVICE AND MANUFACTURING METHOD OF FIBER-TYPE ELECTRODE**

(30) Priority: 17.12.2024 KR 20240189082
(71) Applicant: SAMSUNG SDI CO., LTD., Yongin-si, Gyeonggi-do 17084 (KR)
(72) Inventor: LEE, Minho, 17084 Yongin-si (KR)
(74) Representative: Maiwald GmbH

(57) **Abstract**

A manufacturing device of a fiber-type electrode includes: a bath including a coagulant; a transport portion including a supply roll provided outside the bath, a take-up roll provided inside the bath to be immersed in the coagulant, and a winding roll provided outside the bath, and configured to transport a fiber-type substrate; and a nozzle between the supply roll and the take-up roll. The nozzle includes a guide pipe that provides a moving passage of the fiber-type substrate, an inner main body around the guide pipe and that provides a central axis space in which an active material solution is supplied, and an outer main body around the inner main body and that provides a peripheral space in which a polymer solution is supplied.

## Description

### BACKGROUND

### 1. Field

Embodiments of the present disclosure relate to a device for manufacturing an electrode of a fiber-type rechargeable battery and a method for manufacturing the electrode of the fiber-type rechargeable battery using the device.

### 2. Description of the Related Art

A rechargeable battery may include an electrode assembly and an electrolyte filled inside a fixed external package, in which a space is specifically allocated to place the rechargeable battery inside the object that uses the rechargeable battery as a power source, which results in restrictions on the degree of freedom.

In a flexible rechargeable battery that can be deformable, such as, a fiber-type rechargeable battery, the rechargeable battery can be deformed and arranged to fit the remaining space of the object, so a greater degree of freedom can be achieved in the design and production of the object. A fiber-type rechargeable battery may include a bundle of fiber-type electrodes.

### SUMMARY

Embodiments of the present disclosure provide a device for manufacturing a fiber-type electrode and a method for manufacturing the fiber-type electrode using the device.

A manufacturing device of a fiber-type electrode according to an aspect includes: a bath including a coagulant; a transport portion including a supply roll provided outside the bath, a take-up roll provided inside the bath to be immersed in the coagulant, and a winding roll provided outside the bath, and configured to transport a fiber-type substrate; and a nozzle between the supply roll and the take-up roll. The nozzle includes a guide pipe providing a moving passage of the fiber-type substrate, an inner main body around (e.g., surrounding) the guide pipe and providing a central axis space in which an active material solution is supplied, and an outer main body around (e.g., surrounding) the inner main body and providing a peripheral space in which a polymer solution is supplied.

The inner main body may include a first pipe portion and a first inclined portion around (e.g., surrounding) the guide pipe and a first nozzle tip having a smallest diameter in the inner main body. An active material solution layer may be coated on a surface of the fiber-type substrate passing through the first nozzle tip. The manufacturing device may further include a first supply portion that is connected to the inner main body and supplies the active material solution to the central axis space at a set or predetermined pressure.

The outer main body may include a second pipe portion and a second inclined portion around (e.g., surrounding) the inner main body and a second nozzle tip having a smallest diameter in the outer main body. A polymer solution layer may be coated on a surface of the polymer solution layer passing through the second nozzle tip. The manufacturing device may further include a second supply portion that is connected to the outer main body and supplies the polymer solution to the peripheral space at a set or predetermined pressure.

An end portion of the guide pipe, the first nozzle tip, and the second nozzle tip may be sequentially provided at a distance from each other along a transport direction of the fiber-type substrate in the nozzle. The nozzle may be provided at an upper side of the coagulant so that at least a portion of the second nozzle tip is immersed in the coagulant.

The manufacturing device may further include a drier that is provided in front of the winding roll outside the bath. The active material solution layer and the polymer solution layer may be coagulated while passing through the coagulant and may be dried by the drier to become an active material layer and a separation layer.

A manufacturing method of a fiber-type electrode according to an aspect includes: injecting a coagulant in a bath; providing a nozzle at an upper side of the coagulant, the nozzle including a guide pipe, an inner main body around (e.g., surrounding) the guide pipe, and an outer main body around (e.g., surrounding) the inner main body; transporting a fiber-type substrate so that the fiber-type substrate sequentially passes through the guide pipe and the coagulant and concurrently (e.g., simultaneously) spinning the fiber-type substrate around (e.g., surrounded by) an active material solution layer and a polymer solution layer from the nozzle into the coagulant; and coagulating and drying the active material solution layer and the polymer solution layer to form an active material layer and a separation layer.

The inner main body may include a central axis space in which an active material solution is supplied and a first nozzle tip that discharges the fiber-type substrate, and may coat the active material solution layer on a surface of the fiber-type substrate passing through the first nozzle tip.

The outer main body may include a peripheral space where a polymer solution is supplied and a second nozzle tip that discharges the fiber-type substrate and the active material solution layer, and may coat the polymer solution layer on a surface of the active material solution layer passing through the second nozzle tip. The active material solution layer and the polymer solution layer may be maintained in a separated state without mixing with each other due to a difference in density.

A supply roll and a winding roll may be provided outside the bath. A take-up roll may be provided inside the bath to be immersed in the coagulant. The fiber-type substrate may be unwound from the supply roll and then may be wound on the winding roll through the guide pipe and the take-up roll. A transfer roll may be between the take-up roll and the winding roll. The fiber-type substrate may move in a diagonal upward direction from the take-up roll toward the transfer roll. A drier may be disposed in front of the winding roll. The active material solution layer and the polymer solution layer may be coagulated through the coagulant and then may be dried by the drier.

The fiber-type substrate may be a positive electrode substrate, the active material solution may be a positive active material solution, and the active material layer may be a positive active material layer. In embodiments, the fiber-type substrate may be a negative electrode substrate, the active material solution may be a negative active material solution, and the active material layer may be a negative active material layer.

The embodiments may sequentially form the active material layer and the separation layer on a surface of the fiber-type substrate and may manufacture the fiber-type electrode having high efficiency using a simple mechanical configuration including the nozzle and the transport portion.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1 is a configuration diagram of a manufacturing device of a fiber-type electrode according to embodiments.
FIG. 2 is an enlarged view of a nozzle of the manufacturing device shown in FIG. 1.
FIG. 3 is a configuration diagram of a fiber-type rechargeable battery.
FIG. 4 is a partially enlarged view of FIG. 3.
Each of FIG. 5 and FIG. 6 is a cross-sectional view of the fiber-type rechargeable battery.
FIG. 7 is a flowchart showing a manufacturing method of the fiber-type electrode according to embodiments.

### DETAILED DESCRIPTION

Embodiments of the present disclosure will be described more fully hereinafter with reference to the accompanying drawings so that those skilled in the art could easily implement the embodiments. Embodiments of the present disclosure may be modified in various suitable ways, all without departing from the scope of the present disclosure.

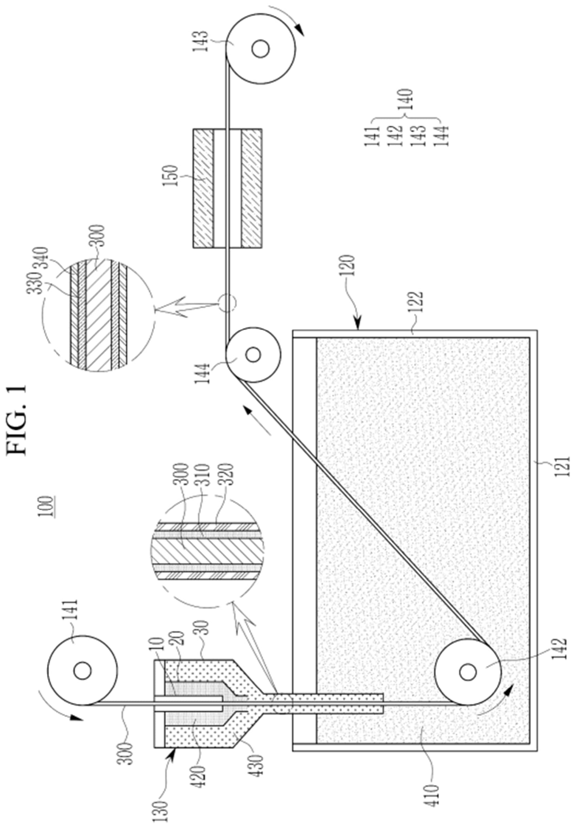

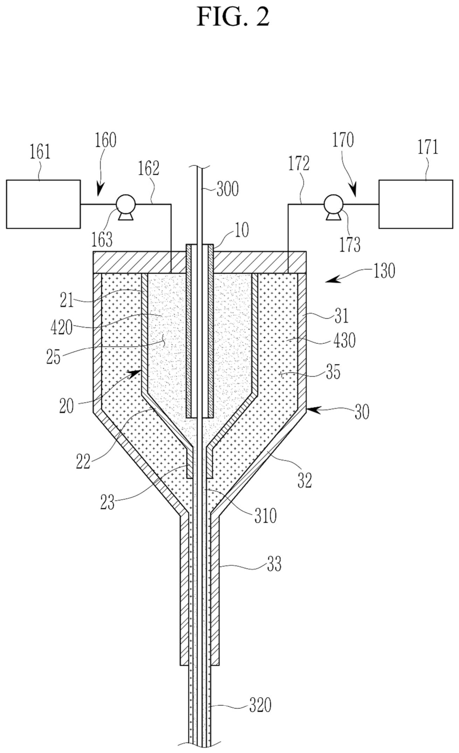

FIG. 1 is a configuration diagram of a manufacturing device of a fiber-type electrode according to embodiments. FIG. 2 is an enlarged view of a nozzle of the manufacturing device shown in FIG. 1.

Referring to FIG. 1 and FIG. 2, a fiber-type electrode manufacturing device 100 (hereinafter, for convenience, referred to as a manufacturing device) of the present embodiment may include a bath (or a tank) 120 to contain a coagulant 410, a nozzle 130 having a triple structure of a guide pipe 10, an inner main body 20, and an outer main body 30, a transport portion 140 to transport a fiber-type substrate 300 so that the fiber-type substrate 300 sequentially passes through the inside of the nozzle 130 and the coagulant 410, and a drier 150 for drying the fiber-type substrate 300 released from the coagulant 410.

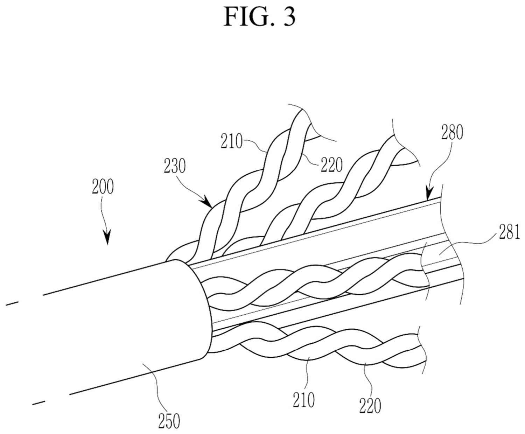

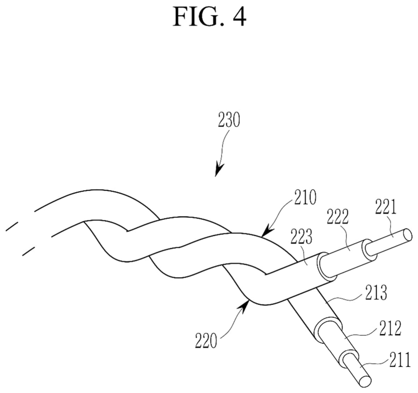

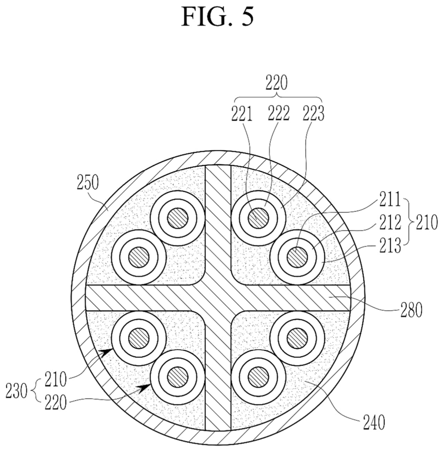

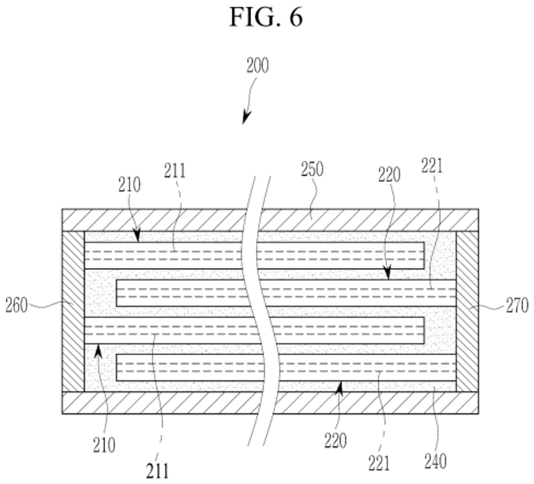

Before a configuration of the manufacturing device 100 is described, the fiber-type rechargeable battery will be described. FIG. 3 is a configuration diagram of the fiber-type rechargeable battery. FIG. 4 is a partially enlarged view of FIG. 3. Each of FIG. 5 and FIG. 6 is a cross-sectional view of the fiber-type rechargeable battery. The fiber-type rechargeable battery illustrated in FIGS. 3 to 6 is only one example, and various suitable modifications may be made.

Referring to FIGS. 3 to 6, a fiber-type rechargeable battery 200 may include a plurality of fiber-type electrodes 230, a protective layer 250 around (e.g., surrounding) the plurality of fiber-type electrodes 230 together with an electrolyte 240, a positive electrode cap 260 provided at one end portion of the protective layer 250, and a negative electrode cap 270 provided at an opposite end portion of the protective layer 250. The fiber-type electrode 230 may include at least one positive electrode fiber 210 and at least one negative electrode fiber 220.

The positive electrode fiber 210 may include a thread-shaped positive electrode substrate 211, a positive active material layer 212 around (e.g., surrounding) the positive electrode substrate 211, and a separation layer 213 around (e.g., surrounding) the positive active material layer 212. The negative electrode fiber 220 may include a thread-shaped negative electrode substrate 221, a negative active material layer 222 around (e.g., surrounding) the negative electrode substrate 221, and a separation layer 223 around (e.g., surrounding) the negative active material layer 222. The positive electrode substrate 211 may be referred to as a positive current collector, and the negative electrode substrate 221 may be referred to as a negative current collector.

At least one positive electrode fiber 210 and at least one negative electrode fiber 220 may be twisted together to form a twisted pair. FIG. 3 illustrates an example where the plurality of fiber-type electrodes 230 include four twisted pairs. The separation layers 213 and 223 of the positive electrode fiber 210 and the negative electrode fiber 220 may physically separate the positive active material layer 212 and the negative active material layer 222, and may contain an electrolyte within a micropore.

The protective layer 250 may be an outer coating layer of the fiber-type rechargeable battery 200, may include (e.g., be made of) a polymer resin, and may have an easily bent property (e.g., may be flexible). The electrolyte 240 may exist in any one selected from a liquid phase, a solid phase, and a gel phase.

The positive electrode cap 260 and the negative electrode cap 270 may seal both end portions of the protective layer 250 to prevent or reducing leaking of the electrolyte 240. The positive electrode cap 260 may be coupled to a plurality of positive electrode substrates 211 to function as a positive electrode terminal. The negative electrode cap 270 may be coupled to a plurality of negative electrode substrates 221 to function as a negative electrode terminal.

The fiber-type rechargeable battery 200 may further include a filler 280 that functions as a partition wall. The filler 280 may be provided at a center within the protective layer 250, and may include groove portions 281 having a number corresponding to the number of a plurality of twisted pairs. Each of the plurality of twisted pairs may be provided one by one in a groove portion 281 of the filler 280. The filler 280 may include (e.g., be made of) a polymer resin, and may have an easily bent property (e.g., may be flexible).

Referring back to FIG. 1 and FIG. 2, the manufacturing device 100 of the present embodiment may be a device for manufacturing the fiber-type electrode used in the fiber-type rechargeable battery. Any one selected from the positive electrode fiber and the negative electrode fiber may be manufactured according to a material of the fiber-type substrate 300 transported by the transport portion 140 and a component of an active material solution 420 supplied to the nozzle 130. The fiber-type substrate 300 may refer to the positive electrode substrate or the negative electrode substrate.

The bath 120 may be implemented as a container having an open upper side. For example, the bath 120 may include a bottom portion 121 and a side portion 122 connected to an edge of the bottom portion 121. The side portion 122 may be formed in various suitable shapes such as a quadrangle (e.g., generally a quadrangle) and a circle (e.g., generally a circle). The bath 120 may contain the coagulant 410. The coagulant 410 may have a function to coagulate an active material solution layer 310 and a polymer solution layer 320 that will be further described herein using a chemical reaction and/or a dehydration action.

The nozzle 130 may include the triple structure of the guide pipe 10, the inner main body 20 around (e.g., surrounding) the guide pipe 10, and the outer main body 30 around (e.g., surrounding) the inner main body 20. The inner main body 20 may be an inner nozzle to coat the active material solution layer 310. The outer main body 30 may be an outer nozzle to coat the polymer solution layer 320.

The guide pipe 10 may be a cylindrical pipe (e.g., a generally cylindrical pipe) having an empty inside and two open ends (e.g., is open at both ends), and may be provided at an innermost side of the nozzle 130. The guide pipe 10 may function as a moving passage of the fiber-type substrate 300 that passes the fiber-type substrate 300 at an inner center of the nozzle 130.

The inner main body 20 may be around (e.g., surround) the guide pipe 10 at a set or predetermined distance from the guide pipe 10, and may provide a central axis space 25 in which the active material solution 420 is supplied between the inner main body 20 and the guide pipe 10. The inner main body 20 may include a first pipe portion 21 having a constant diameter (e.g., a substantially constant diameter), a first inclined portion 22 having a gradually decreasing diameter, and a first nozzle tip 23 having a smallest diameter in the inner main body 20.

The guide pipe 10 may be provided inside the first pipe portion 21 and the first inclined portion 22. One end of the guide pipe 10 (e.g., a lower end based on the drawings) through which the fiber-type substrate 300 is discharged may be provided at a set or predetermined distance from the first inclined portion 22 and the first nozzle tip 23 along a transport direction of the fiber-type substrate 300.

The manufacturing device 100 may include a first supply portion 160 to supply the active material solution 420 to the central axis space 25. The first supply portion 160 may include a first tank 161 to store the active material solution 420, a first connection pipe 162 to connect the first tank 161 and the central axis space 25, and a first pump 163 to pump the active material solution 420 of the first tank 161 into the central axis space 25. The first pump 163 may pump the active material solution 420 at a set or predetermined pressure.

The outer main body 30 may be around (e.g., surround) the inner main body 20 at a set or predetermined distance from the inner main body 20, and may provide a peripheral space 35 in which a polymer solution 430 is supplied between the outer main body 30 and the inner main body 20. The outer main body 30 may include a second pipe portion 31 having a constant diameter (e.g., a substantially constant diameter), a second inclined portion 32 having a gradually decreasing diameter, and a second nozzle tip 33 having a smallest diameter in the outer main body 30.

The inner main body 20 may be provided inside the second pipe portion 31 and the second inclined portion 32. One end of the first nozzle tip 23 (e.g., a lower end based on the drawings) through which the fiber-type substrate 300 and the active material solution 420 are discharged may be provided at a set or predetermined distance from the second inclined portion 32 and the second nozzle tip 33 along the transport direction of the fiber-type substrate 300.

The manufacturing device 100 may include a second supply portion 170 to supply the polymer solution 430 to the peripheral space 35. The second supply portion 170 may include a second tank 171 to store the polymer solution 430, a second connection pipe 172 to connect the second tank 171 and the peripheral space 35, and a second pump 173 to pump the polymer solution 430 of the second tank 171 into the peripheral space 35. The second pump 173 may pump the polymer solution 430 at a set or predetermined pressure.

The active material solution 420 may be a solution to form the active material layer of the fiber-type electrode, and may be a positive active material solution or a negative active material solution. The polymer solution 430 may be a solution to form the separation layer of the fiber-type electrode. The active material solution 420 may be in a slurry state that is a semiliquid mixture, and may have a higher density than a density of the polymer solution 430. The nozzle 130 may be provided above the bath 120 so that a portion or all of the second nozzle tip 33 is immersed in the coagulant 410.

The transport portion 140 may include a supply roll 141 that supplies the fiber-type substrate 300 to the guide pipe 10 of the nozzle 130, a take-up roll 142 that is provided inside the bath 120 to be immersed in the coagulant 410, and a winding roll 143 that winds the fiber-type substrate 300 released from the coagulant 410. The transport portion 140 may further include at least one transfer roll 144 to change a moving direction of the fiber-type substrate 300.

The supply roll 141 may wind the fiber-type substrate 300, and may unwind the fiber-type substrate 300 at a constant speed (e.g., a substantially constant speed). The nozzle 130 may be between the supply roll 141 and the take-up roll 142, and for example, the nozzle 130 may be provided vertically with respect to the ground so that the transport direction of the fiber-type substrate 300 is parallel (e.g., substantially parallel) to a gravity direction.

The take-up roll 142 may be provided inside the bath 120 so that it is completely immersed in the coagulant 410. For example, the take-up roll 142 may be provided closer to the bottom portion 121 than to an upper end of the bath 120. The take-up roll 142 may be rotatably coupled to the side portion 122 using a rotation axis, a bearing, and/or the like. The take-up roll 142 may be rotated by power of the winding roll 143 that winds the fiber-type substrate 300, or may be rotated using its own driving device such as a motor.

The take-up roll 142 may perform a function to change a progress direction of the fiber-type substrate 300. For example, the fiber-type substrate 300 that moves in a downward direction from the nozzle 130 may go through the take-up roll 142, and may have its progress direction changed to an upward direction.

The transfer roll 144 may be between the take-up roll 142 and the winding roll 143 along the transport direction of the fiber-type substrate 300. The transfer roll 144 may be provided at an upper side of the bath 120, and may be provided at a set or predetermined distance from the take-up roll 142 along a horizontal direction of the drawings. In embodiments, the fiber-type substrate 300 that passes through the take-up roll 142 may move in a diagonal upward direction. A movement of the fiber-type substrate 300 in the diagonal direction may function to increase a time for the fiber-type substrate 300 to stay in the coagulant 410.

The fiber-type substrate 300 unwound from the supply roll 141 may sequentially pass through the guide pipe 10 of the nozzle 130, the first nozzle tip 23, and the second nozzle tip 33, and then may pass through the take-up roll 142 and the transfer roll 144 to be wound on the winding roll 143. The fiber-type substrate 300 may not be in contact with the active material solution 420 and the polymer solution 430 inside the guide pipe 10 of the nozzle 130, and may smoothly move without (e.g., substantially without) resistance (e.g., flow resistance) with a fluid.

The fiber-type substrate 300 may be in contact with the active material solution 420 filled in the central axis space 25 immediately (e.g., substantially immediately) after exiting one end of the guide pipe 10 (e.g., a lower end based on the drawings), and a surface of the fiber-type substrate 300 may be covered with the active material solution layer 310 having a set or predetermined thickness while passing through the first nozzle tip 23 of the inner main body 20. For example, the inner main body 20 of the nozzle 130 may function to coat the active material solution layer 310 on a surface of a moving fiber-type substrate 300.

The active material solution layer 310 discharged from the first nozzle tip 23 may be in contact with the polymer solution 430 filled in the peripheral space 35. A surface of the active material solution layer 310 may be covered with the polymer solution layer 320 having a set or predetermined thickness while moving along the second nozzle tip 33 of the outer main body 30. In embodiments, the outer main body 30 of the nozzle 130 may function to coat the polymer solution layer 320 on the surface of the active material solution layer 310 that moves along the fiber-type substrate 300.

For example, both the active material solution layer 310 and the polymer solution layer 320 may be liquid, but may be maintained in a separated state (e.g., separated from each other) without mixing with each other due to a difference in density. The active material solution layer 310 and the polymer solution layer 320 spun (or emitted) from the second nozzle tip 33 into the coagulant 410 may be coagulated by a chemical reaction and/or a dehydration action of the coagulant 410 while passing through the coagulant 410. The active material solution layer 310 may be solidified by coagulation to become an active material layer 330, and the polymer solution layer 320 may be solidified by coagulation to become a separation layer 340. The active material layer 330 may refer to the positive active material layer or the negative active material layer. The separation layer 340 may refer to the separation layer of the positive electrode fiber or the separation layer of the negative electrode fiber.

A thickness of each of the active material layer 330 and the separation layer 340 may suitable vary depending on a moving speed of the fiber-type substrate 300. For example, the moving speed of the fiber-type substrate 300 may be proportional to a rotation speed of the winding roll 143 and the take-up roll 142. The thickness of each of the active material layer 330 and the separation layer 340 may be suitably or precisely controlled by adjusting the rotation speed of the winding roll 143 and the take-up roll 142.

The drier 150 may be between the transfer roll 144 and the winding roll 143, and may apply heat to the active material layer 330 and the separation layer 340 to dry them. In the drawings, one drier 150 is shown as an example, but a plurality of driers may be provided side by side along the transport direction of the fiber-type substrate 300. The plurality of driers may have a configuration in which at least one selected from a heating temperature and a drying method is different.

A solvent component that remains in the active material layer 330 and the separation layer 340 and a coagulant component that remains in the active material layer 330 and the separation layer 340 may be removed by a drying process. The fiber-type substrate 300 that passes through the coagulant 410 and the drier 150 may become a fiber-type electrode by forming the active material layer 330 and the separation layer 340 on a surface of the fiber-type substrate 300. A completed fiber-type electrode may be wound on the winding roll 143.

The manufacturing device 100 of the above-described configuration may use a fiber spinning process using a hollow fiber nozzle, and may sequentially form the active material layer 330 and the separation layer 340 on a surface of the fiber-type substrate 300 and may manufacture the fiber-type electrode with high efficiency using a simple mechanical configuration.

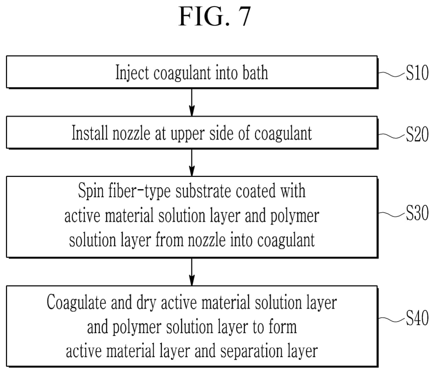

FIG. 7 is a flowchart showing a manufacturing method of the fiber-type electrode according to embodiments.

Referring to FIG. 7, the manufacturing method of the fiber-type according to the present embodiment may include S10 injecting (or providing or putting) the coagulant into the bath, S20 installing the nozzle at an upper side of the coagulant, and S30 transporting the fiber-type substrate so that the fiber-type substrate sequentially passes through the guide pipe of the nozzle and the coagulant and concurrently (e.g., simultaneously) spinning the fiber-type substrate from the nozzle into the coagulant.

In S30, the fiber-type substrate spun into the coagulant may be coated with the active material solution layer, and the active material solution layer may be coated with the polymer solution layer. In embodiments, in S30, the nozzle may spin the fiber-type substrate sequentially coated with the active material solution layer and the polymer solution layer to the coagulant. In S30, the active material solution layer and the polymer solution layer may be maintained in a separated state (e.g., separated from each other) without mixing with each other due to a difference in density.

The manufacturing method of the fiber-type according to the present embodiment may include S40 coagulating (or solidifying) and drying the active material solution layer and the polymer solution layer to form the active material layer and the separation layer. In S40, the fiber-type substrate, the active material layer around (e.g., surrounding) the fiber-type substrate, and the separation layer around (e.g., surrounding) the active material layer may constitute the fiber-type electrode.

Referring to FIGS. 1 to 7, if (e.g., when) the positive electrode fiber 210 is manufactured, in S20, the fiber-type substrate 300 may be the positive electrode substrate 211, and the active material solution 420 may be a positive active material solution. If (e.g., when) the negative electrode fiber 220 is manufactured, in S20, the fiber-type substrate 300 may be the negative electrode substrate 221, and the active material solution 420 may be a negative active material solution.

For example, the positive electrode substrate 211 may include (e.g., be formed of) an aluminum wire. For example, the negative electrode substrate 221 may be formed of a copper wire or a nickel wire.

The positive active material solution may include a positive active material and a solvent, and may further include a binder and/or a conductive material (e.g., an electrically conductive material). The positive active material may include lithium transition metal composite oxide. For example, the lithium transition metal composite oxide may include at least one selected from lithium nickel-based oxide, lithium cobalt-based oxide, lithium manganese-based oxide, a lithium iron phosphate-based compound, and cobalt-free lithium nickel manganese-based oxide. For example, the solvent may be an organic solvent including N-methyl-2-pyrrolidone (NMP) and/or the like, or an aqueous solvent including water.

The negative active material solution may include a negative active material and a solvent, and may further include a binder and/or a conductive material (e.g., an electrically conductive material). The negative active material may include at least one selected from a carbon-based active material and a silicon-based active material. The carbon-based active material may include at least one selected from natural graphite and artificial graphite. The silicon-based active material may include at least one selected from a silicon-carbon composite active material, silicon oxide (SiOₓ, 0<x≤2), and silicon carbide (SiC). For example, the solvent may be an aqueous solvent including water.

The polymer solution 430 may include a polymer material and a solvent. For example, the polymer material may include one or more selected from polyethylene, polypropylene, polyethylene terephthalate, polypropylene terephthalate, polybutylene terephthalate, polyester, polycarbonate, and polyimide. For example, the solvent may be an organic solvent including dichloromethane and/or the like.

The positive active material solution and the negative active material solution may be in a highly viscous slurry state. The polymer solution 430 may be a liquid having a viscosity lower than that of each of the positive active material solution and the negative active material solution. A density of the active material solution 420 may be higher than that of the polymer solution 430. The active material solution 420 and the polymer solution 430 may be separated from each other without (or substantially without) mixing with each other due to a difference in density even if (e.g., when) they are in contact with each other.

For example, a density of the positive active material solution may be approximately 1.4 g/ml to 2.5 g/ml, and a density of the negative active material solution may be approximately 1.2 g/ml to 1.4 g/ml. The density of the polymer solution 430 may be approximately 1 g/ml to 1.17 g/ml.

In S10, the bath 120 may be implemented as a container having an open upper side. In S20, the nozzle 130 may be provided at an upper side of the bath 120 so that a portion or all of the second nozzle tip 33 is immersed in the coagulant 410. The coagulant 410 may include a coagulant and a solvent, and various suitable kinds of coagulants and solvents may be used according to a component of the polymer solution 430.

In S30, the transport portion 140 may transfer the fiber-type substrate 300 at a constant speed (e.g., a substantially constant speed). The transport portion 140 may include the supply roll 141 to unwind the fiber-type substrate 300, the take-up roll 142 provided to be immersed in the coagulant 410 inside the bath 120, and the winding roll 143 to wind the fiber-type substrate 300. The transfer roll 144 may be between the take-up roll 142 and the winding roll 143.

The nozzle 130 may be between the supply roll 141 and the take-up roll 142. The fiber-type substrate 300 unwound from the supply roll 141 may pass through the guide pipe 10 of the nozzle 130, and may be wound on the winding roll 143 through the take-up roll 142 and the transfer roll 144. Along with the transfer of the fiber-type substrate 300, the active material solution 420 may be supplied to the central axis space 25 of the inner main body 20 at a set or predetermined pressure, and the polymer solution 430 may be supplied to the peripheral space 35 of the outer main body 30 at a set or predetermined pressure.

In S30, the nozzle 130 may spin the fiber-type substrate 300 sequentially coated with the active material solution layer 310 and the polymer solution layer 320 to the coagulant 410. For example, the active material solution layer 310 may be coated on a surface of the fiber-type substrate 300 inside the first nozzle tip 23 to a set or predetermined thickness immediately (e.g., substantially immediately) after the fiber-type substrate 300 exits the guide pipe 10 inside the nozzle 130. Thereafter, the polymer solution layer 320 may be coated on a surface of the active material solution layer 310 inside the second nozzle tip 33 to a set or predetermined thickness immediately (e.g., substantially immediately) after the fiber-type substrate 300 and the active material solution layer 310 exit the first nozzle tip 23.

In S40, the active material solution layer 310 and the polymer solution layer 320 may be coagulated by a chemical reaction and/or a dehydration action of the coagulant 410 while passing through the coagulant 410, and after the active material solution layer 310 and the polymer solution layer 320 exit the coagulant 410, the active material solution layer 310 and the polymer solution layer 320 may be dried by the drier 150 to complete the active material layer 330 and the separation layer 340. The drier 150 may be between the transfer roll 144 and the winding roll 143, and may remove a solvent component and a coagulant component that remains in the active material layer 330 and the separation layer 340 by a drying process.

In S20 to S40, thicknesses of the active material layer 330 and the separation layer 340 may suitably vary according to a moving speed of the fiber-type substrate 300. For example, as a rotation speed of the winding roll 143 and the take-up roll 142 are slower, the active material layer 330 and the separation layer 340 may be made thicker. A thickness of each of the active material layer 330 and the separation layer 340 may be suitably or precisely controlled by adjusting the rotation speed of the winding roll 143 and the take-up roll 142.

Any one selected from the positive electrode fiber 210 and the negative electrode fiber 220 may be completed through the above-described process. The completed positive electrode fiber 210 or the completed negative electrode fiber 220 may be wound on the winding roll 143.

In the manufacturing method of the present embodiment, the active material solution layer 310 and the polymer solution layer 320 may be concurrently (e.g., simultaneously) extracted from the nozzle 130 together with the fiber-type substrate 300, and the active material solution layer 310 and the polymer solution layer 320 may be coagulated and then may be dried to form the active material layer 330 and the separation layer 340. According to the manufacturing method of the present embodiment, a configuration of the manufacturing device 100 may be simplified, the number of processes may be minimized or reduced, and a manufacturing efficiency of the fiber-type electrode may be improved.

Referring to FIGS. 3 to 6, the positive electrode fiber 210 and the negative electrode fiber 220 completed by the above-described process may form a twisted pair, and a plurality of twisted pairs and the electrolyte 240 may be around (e.g., surrounded by) the protective layer 250 to form the fiber-type rechargeable battery 200. Two or more fiber-type rechargeable batteries may be twisted together to form a thick rechargeable battery cable, or a plurality of fiber-type rechargeable batteries may be woven into warp and weft yarns to form a rechargeable battery fabric.

In the fiber-type rechargeable battery 200, an internal temperature and an internal pressure may rapidly increase due to various causes such as rapid charging and discharging, an external impact, exposure to a high temperature environment, and/or the like. For example, the filler 280 inside the protective layer 250 may physically separate the plurality of twisted pairs to prevent or reduce an occurrence, likelihood, or degree of sudden destruction such as fire or explosion of the fiber-type rechargeable battery 200.

The fiber-type rechargeable battery 200 may be easily deformed by an external force, and may be deformed in various suitable shapes. Accordingly, because a space is not specifically allocated to provide the fiber-type rechargeable battery 200 inside an object using the fiber-type rechargeable battery 200 as a power source and the fiber-type rechargeable battery 200 is deformed and provided to fit the remaining space of the object, the object may have a great degree of freedom in design and production.

## Claims

1. A manufacturing device (100) of a fiber-type electrode (230), comprising:
a bath (120) comprising a coagulant (410);
a transport portion (140) comprising a supply roll (141) provided outside the bath (120), a take-up roll (142) provided inside the bath (120) to be immersed in the coagulant (410), and a winding roll (143) provided outside the bath (120), and configured to transport a fiber-type substrate (300); and
a nozzle (130) between the supply roll (141) and the take-up roll (142),
wherein the nozzle (130) comprises a guide pipe (10) that provides a moving passage of the fiber-type substrate (300), an inner main body (20) around the guide pipe (10) and that provides a central axis space (25) in which an active material solution (420) is supplied, and an outer main body (30) around the inner main body (20) and that provides a peripheral space (35) in which a polymer solution (430) is supplied.

2. The manufacturing device (100) as claimed in claim 1, wherein:
the inner main body (20) comprises a first pipe portion (21) and a first inclined portion (22) around the guide pipe (10) and a first nozzle tip (23) having a smallest diameter in the inner main body (20); and
an active material solution layer (310) is coated on a surface of the fiber-type substrate (300) that passes through the first nozzle tip (23).

3. The manufacturing device (100) as claimed in claim 2, further comprising a first supply portion (160) that is connected to the inner main body (20) and supplies the active material solution (420) to the central axis space (25) at a set pressure.

4. The manufacturing device (100) as claimed in claim 2 or 3, wherein:
the outer main body (30) comprises a second pipe portion (31) and a second inclined portion (32) around the inner main body (20) and a second nozzle tip (33) having a smallest diameter in the outer main body (30); and
a polymer solution layer (320) is coated on a surface of the polymer solution layer (320) that passes through the second nozzle tip (33).

5. The manufacturing device (100) as claimed in claim 4, further comprising a second supply portion (170) that is connected to the outer main body (30) and supplies the polymer solution (430) to the peripheral space (35) at a set pressure.

6. The manufacturing device (100) as claimed in claim 4 or 5, wherein an end portion of the guide pipe (10), the first nozzle tip (23), and the second nozzle tip (33) are sequentially provided at a distance from each other along a transport direction of the fiber-type substrate (300) in the nozzle (130).

7. The manufacturing device (100) as claimed in any one of the claims 4 to 6, wherein the nozzle (130) is provided at an upper side of the coagulant (410) so that at least a portion of the second nozzle tip (33) is immersed in the coagulant (410).

8. The manufacturing device (100) as claimed in any one of the claims 4 to 7, further comprising a drier (150) that is provided in front of the winding roll (143) outside the bath (120);
wherein preferably the active material solution layer (310) and the polymer solution layer (320) are coagulated while passing through the coagulant (410) and are dried by the drier (150) to become an active material layer (330) and a separation layer.

9. A manufacturing method of a fiber-type electrode (230), comprising:
providing (S10) a coagulant (410) in a bath (120);
providing (S20) a nozzle (130) at an upper side of the coagulant (410), the nozzle (130) comprising a guide pipe (10), an inner main body (20) around the guide pipe (10), and an outer main body (30) around the inner main body (20);
transporting (S30) a fiber-type substrate (300) so that the fiber-type substrate (300) sequentially passes through the guide pipe (10) and the coagulant (410) and concurrently spinning the fiber-type substrate (300) around an active material solution layer (310) and a polymer solution layer (320) from the nozzle (130) into the coagulant (410); and
coagulating and drying (S40) the active material solution layer (310) and the polymer solution layer (320) to form an active material layer (330) and a separation layer.

10. The manufacturing method as claimed in claim 9, wherein the inner main body (20) comprises a central axis space (25) in which an active material solution (420) is supplied and a first nozzle tip (23) that discharges the fiber-type substrate (300), and coats the active material solution layer (310) on a surface of the fiber-type substrate (300) that passes through the first nozzle tip (23).

11. The manufacturing method as claimed in claim 10, wherein the outer main body (30) comprises a peripheral space (35) where a polymer solution (430) is supplied and a second nozzle tip (33) that discharges the fiber-type substrate (300) and the active material solution layer (310), and coats the polymer solution layer (320) on a surface of the active material solution layer (310) that passes through the second nozzle tip (33).

12. The manufacturing method as claimed in claim 11, wherein the active material solution layer (310) and the polymer solution layer (320) are maintained in a separated state without mixing with each other due to a difference in density.

13. The manufacturing method as claimed in any one of the claims 9 to 12, wherein:
a supply roll (141) and a winding roll (143) are provided outside the bath (120);
a take-up roll (142) is provided inside the bath (120) to be immersed in the coagulant (410); and
the fiber-type substrate (300) is unwound from the supply roll (141) and then is wound on the winding roll (143) through the guide pipe (10) and the take-up roll (142).

14. The manufacturing method as claimed in claim 13, wherein:
a transfer roll (144) is between the take-up roll (142) and the winding roll (143); and
the fiber-type substrate moves in a diagonal upward direction from the take-up roll (142) toward the transfer roll (144).

15. The manufacturing method as claimed in any one of the claims 9 to 14, wherein:
the fiber-type substrate (300) is a positive electrode substrate;
the active material solution (420) is a positive active material solution; and
the active material layer (330) is a positive active material layer; or
wherein the fiber-type substrate (300) is a negative electrode substrate;
the active material solution (420) is a negative active material solution; and
the active material layer (330) is a negative active material layer.
